# EUROPÄISCHE PATENTSCHRIFT

(11) **EP 2 647 557 B1**
(45) Veröffentlichungstag und Bekanntmachung des Hinweises auf die Patenterteilung: **28.10.2015**
(21) Anmeldenummer: 13001664.5
(22) Anmeldetag: 02.04.2013
(51) Int. Cl.: B62D 51/00, B60K 26/02, B62B 5/06, B60T 7/08, B60L 3/12

(54) **Flurförderzeug mit einer um eine horizontale Achse schwenkbaren Deichsel**
Industrial truck with a drawbar pivoting about a horizontal axis
Chariot de manutention avec un timon pivotant autour d'un axe horizontal

(30) Priorität: 02.04.2012 DE 102012006552
(43) Veröffentlichungstag der Anmeldung: 09.10.2013
(73) Patentinhaber: Jungheinrich Aktiengesellschaft, 22047 Hamburg (DE)
(72) Erfinder: Horner, Stefan, DE - 24848 Kropp (DE); Jungclaus, Manfred, DE - 20535 Hamburg (DE); Mahler, Arne, DE - 22335 Hamburg (DE)
(74) Vertreter: Hauck Patentanwaltspartnerschaft mbB

(56) Entgegenhaltungen:
- EP-A1- 1 935 838
- EP-A1- 2 284 061
- EP-A2- 2 384 951
- DE-A1-102004 034 742
- US-A1- 2007 137 904
- US-A1- 2009 012 677

## Beschreibung

Die Erfindung betrifft ein Flurförderzeug mit einer um eine horizontale Achse schwenkbar am Fahrzeug angelenkten Deichsel und einer Fahrzeugsteuerung zur Steuerung des Flurförderzeugs unter Berücksichtigung einer Deichselstellung.

Flurförderzeuge mit einer solchen Deichsel werden auch als deichselgeführte Flurförderzeuge bezeichnet. Es ist bekannt, bei der Steuerung derartiger Flurförderzeuge die Deichselstellung zu berücksichtigen. Üblicherweise wird zwischen drei unterschiedlichen Deichselstellungen unterschieden. Befindet sich die Deichsel an einem oberen Anschlag in annähernd vertikaler Stellung, entspricht dies einer Parkposition. Befindet sich die Deichsel an einem unteren Anschlag, zumeist in annähernd horizontaler Stellung, entspricht dies einer Bremsposition. Zwischen Parkposition und Bremsposition erstreckt sich ein größerer Winkelbereich entsprechend einer Fahrposition. Bei der Steuerung des Flurförderzeugs mithilfe einer Fahrsteuerung wird die Deichselstellung berücksichtigt, beispielsweise indem in der Bremsposition der Deichsel eine Bremse aktiviert oder in der Parkposition der Deichsel ein Fahrantrieb außer Betrieb gesetzt wird.

Um die Deichselposition zu erfassen, werden im einfachsten Fall Endschalter nahe der Schwenkachse der Deichsel angeordnet, die von Betätigungselementen der Deichsel betätigt werden. Ebenfalls bekannt ist eine Verwendung induktiver Näherungsschalter, die ebenfalls nahe der Schwenkachse angeordnet werden.

Beispielsweise ist in der Druckschrift EP 2 284 061 A1 ein Flurförderzeug gemäß dem Oberbegriff von Anspruch 1 mit einer besonders vorteilhaften Anordnung eines berührungslosen Sensors beschrieben.

Davon ausgehend ist es die Aufgabe der Erfindung, ein Flurförderzeug der eingangs genannten Art zur Verfügung zu stellen, mit dem die Deichselstellung besonders einfach und zuverlässig erfasst werden kann, sowie ein entsprechendes Verfahren zur Ermittlung einer Deichselposition.

Diese Aufgabe wird gelöst durch das Flurförderzeug mit den Merkmalen des Anspruchs 1. Vorteilhafte Ausgestaltungen sind in den sich anschließenden Unteransprüchen angegeben.

Das Flurförderzeug hat eine um eine horizontale Achse schwenkbar am Fahrzeug angelenkte Deichsel und eine Fahrzeugsteuerung zur Steuerung des Flurförderzeugs unter Berücksichtigung einer Deichselstellung. Das erfindungsgemäße Flurförderzeug zeichnet sich aus durch
- einen an der Deichsel angeordneten, ersten Beschleunigungssensor, der dazu ausgebildet ist, eine Information über die Richtung einer auf ihn wirkenden Beschleunigung zur Verfügung zu stellen,
- einen am Fahrzeug angeordneten, zweiten Beschleunigungssensor, der dazu ausgebildet ist, eine Information über die Richtung einer auf ihn wirkenden Beschleunigung zur Verfügung zu stellen, und
- eine Auswerteeinrichtung, die dazu ausgebildet ist, auf Grundlage einer Richtungsinformation des ersten Beschleunigungssensors und einer Richtungsinformation des zweiten Beschleunigungssensors die Deichselstellung relativ zum Fahrzeug zu ermitteln.

Mit dem Begriff Fahrzeug sind alle Komponenten des Flurförderzeugs mit Ausnahme der Deichsel angesprochen, insbesondere ein Antriebsteil und ein Lastteil des Flurförderzeugs. Das Lastteil kann ein Lasttragmittel, insbesondere in Form von zwei parallel angeordneten Lastarmen aufweisen. Das Antriebsteil kann einen Fahrantrieb aufweisen und mindestens ein lenkbares Rad, insbesondere ein lenkbares Antriebsrad. Das Lenken des lenkbaren Rads kann durch mechanische Koppelung mit der Deichsel erfolgen oder mit einem gesonderten Lenkantrieb, wobei Lenkausschläge der Deichsel, also ein Verschwenken der Deichsel um eine zusätzlich zu der horizontalen Achse vorhandene, vertikale Achse von einem Lenkwinkelsensor erfasst werden kann. Der Fahrantrieb des Antriebsteils kann einen Elektromotor und eine Batterie aufweisen. Die Fahrzeugsteuerung kann im Antriebsteil angeordnet sein. Die Deichsel kann einen Deichselkopf mit mindestens einem Griffabschnitt und einem oder mehreren Betätigungselementen insbesondere für den Fahrantrieb des Flurförderzeugs aufweisen.

Der erste und zweite Beschleunigungssensor stellen eine Information über die Richtung der auf sie wirkenden Beschleunigung zur Verfügung. Die Information kann insbesondere in digitaler Form zur Verfügung gestellt werden, aber auch in Form mehrerer analoger Ausgangssignale. Insbesondere können die Beschleunigungssensoren jeweils drei Werte ausgeben, die Beschleunigung in unterschiedlichen Raumrichtungen angeben. Auf die beiden Beschleunigungssensoren wirkt stets die Erdbeschleunigung ein, die entsprechend in die zur Verfügung gestellten Richtungsinformationen einfließt. Daher sind die zur Verfügung gestellten Richtungsinformationen auch bei ruhendem Fahrzeug aufschlussreich. Gegebenenfalls während der Fahrt zusätzlich auftretende dynamische Beschleunigungen können ebenfalls in die Richtungsinformationen einfließen. In jedem Fall erlauben die Richtungsinformationen auch bei ruhendem Fahrzeug eine Aussage über die relative Orientierung jedes der beiden Beschleunigungssensoren im Raum.

Mithilfe der Auswerteeinrichtung wird auf Grundlage der Richtungsinformationen des ersten und zweiten Beschleunigungssensors die Deichselstellung relativ zum Fahrzeug ermittelt. Hierzu kann beispielsweise eine Differenz zwischen den beiden Richtungsinformationen gebildet werden, um eine relative Winkelstellung zwischen Deichsel und Fahrzeug zu erhalten. Liegen die Richtungsinformationen in vektorieller Form vor, kann auch ein Skalar- oder Vektorprodukt berechnet und daraus die benötigte Winkelinformation gewonnen werden. Durch die Verwendung des zweiten Beschleunigungssensors wird eine Neigung des Fahrzeugs, etwa bei einer Rampenfahrt, berücksichtigt.

Die ermittelte Deichselstellung, die die relative Anordnung der Deichsel in Bezug auf das Fahrzeug angibt, kann der Fahrzeugsteuerung zur Verfügung gestellt und von dieser bei der Steuerung des Flurförderzeugs berücksichtigt werden.

Mit den beiden Beschleunigungssensoren und der Auswerteeinrichtung kann eine zuverlässige Ermittlung der Deichselstellung besonders kostengünstig realisiert werden. Insbesondere kann eine in der Regel von Hand auszuführende Montage von Endschaltern oder induktiven Näherungsschaltern im Bereich der Schwenkachse der Deichsel entfallen. Die Beschleunigungssensoren können viel einfacher montiert werden, weil deren genaue Anordnung im Bezug auf die Schwenkachse keine Rolle spielt. Insbesondere ist ein automatisches Bestücken des Flurförderzeugs mit den Beschleunigungssensoren möglich, insbesondere im selben Arbeitsgang wie die Bestückung mit anderen elektronischen Bauelementen.

Weiterhin vereinfacht sich die elektrische Anlage des Flurförderzeugs, weil keine Leitungen oder Steckverbindungen für die Endschalter oder für induktive Näherungsschalter benötigt werden, die für eine Anbindung der End- oder Näherungsschalter an eine Fahrzeugsteuerung sorgen.

Schließlich sind auch die Beschleunigungssensoren kostengünstiger erhältlich als beispielsweise induktive Näherungsschalter, insbesondere weil sie in vergleichbarer Form in millionenfach verbreiteten Gebrauchsgegenständen wie etwa Smartphones eingesetzt werden.

Durch den einfacheren Aufbau des erfindungsgemäßen Flurförderzeugs erhöht sich auch die Zuverlässigkeit. Insbesondere kann es nicht zu Beschädigungen empfindlicher End- oder Näherungsschalter im Bereich der Schwenkachse oder der hierfür benötigten elektrischen Leitungen kommen.

In einer Ausgestaltung ist die Auswerteeinrichtung dazu ausgebildet, eine Winkelinformation über die Deichselstellung stufenlos oder in mehr als drei Bereiche unterteilt zur Verfügung zu stellen. Die Deichselstellung kann innerhalb der mit den Beschleunigungssensoren erreichbaren Auflösung ohne nennenswerten zusätzlichen Aufwand sehr genau erfasst werden. Dies ermöglicht beispielsweise eine Auswertung von Zwischenstellungen innerhalb des der Fahrposition zugeordneten Bereichs. Beispielsweise kann ein bestimmter Bereich der Deichselstellung einer zusätzlichen Betriebsart des Flurförderzeugs vorbehalten bleiben, beispielsweise einer Schleichfahrt.

In einer Ausgestaltung ist die Auswerteeinrichtung dazu ausgebildet, eine Geschwindigkeitsinformation über die Bewegung der Deichsel relativ zum Fahrzeug zu ermitteln und/oder der Fahrzeugsteuerung zur Verfügung zu stellen. Anders als bei herkömmlichen Flurförderzeugen verwendete mechanische Schalter, reagieren die Beschleunigungssensoren nicht ausschließlich auf das Erreichen oder Überschreiten bestimmter Grenzstellungen der Deichsel, sondern können eine kontinuierliche Richtungsinformation erzeugen. Durch Auswerten dieser Richtungsinformationen kann eine Geschwindigkeit der Relativbewegung zwischen Deichsel und Fahrzeug ermittelt werden. Diese Geschwindigkeitsinformation kann zur Verbesserung der Fahrzeugsteuerung genutzt werden. Beispielsweise kann bei Feststellung einer über einem vorgegebenen Grenzwert liegenden Geschwindigkeit der Deichsel in Richtung zu der Park- oder Bremsposition hin eine für die Park- bzw. Bremsposition vorgesehene Aktion frühzeitig ausgeführt werden, insbesondere bevor die Park- bzw. Bremsposition tatsächlich erreicht wird.

In einer Ausgestaltung ist die Auswerteeinrichtung dazu ausgebildet, eine Beschleunigungsinformation über die Bewegung der Deichsel relativ zum Fahrzeug zu ermitteln und/oder der Fahrzeugsteuerung zur Verfügung zu stellen. Ähnlich wie die beschriebene Auswertung der Geschwindigkeit kann auch die relative Beschleunigung der Deichsel gegenüber dem Fahrzeug gewinnbringend für eine verbesserte Fahrzeugsteuerung ausgenutzt werden. Beispielsweise können über einem vorgegebenen Grenzwert liegende Beschleunigungswerte eine ruckartige Deichselbewegung anzeigen und es kann beispielsweise ein Notstopp ausgelöst werden.

In einer Ausgestaltung sind der erste Beschleunigungssensor und/oder der zweite Beschleunigungssensor elektro-mechanische Mikrosystemkomponenten. Derartige Komponenten, im Englischen bekannt als MEMS (für Micro-Electro-Mechanical-System), sind für die Erfindung besonders geeignet. Sie bringen elektronische und mechanische Komponenten auf kleinstem Raum zusammen. Sie können beispielsweise eine oder mehrere an Federarmen aufgehängte träge Massen aufweisen, sodass auf diese trägen Massen einwirkende, durch Beschleunigungen ausgelöste Kräfte anhand der Verformung der Federarme festgestellt werden können.

In einer Ausgestaltung ist der erste Beschleunigungssensor in einem Kopf der Deichsel angeordnet. Grundsätzlich kann der erste Beschleunigungssensor beliebig an der Deichsel angeordnet werden, solange er beim Schwenken der Deichsel um die horizontale Achse mitbewegt wird. Diese Freiheit der Anordnung besteht bei der herkömmlichen Verwendung von End- oder Näherungsschaltern nicht. Eine Anordnung im Kopf der Deichsel und damit in der Nähe anderer elektrischer oder elektronischer Komponenten ist besonders einfach. Zudem können gegebenenfalls dynamische Beschleunigungen im Bereich des Kopfes der Deichsel, also in großem Abstand von der horizontalen Achse, besonders genau erfasst werden.

In einer Ausgestaltung sind der zweite Beschleunigungssensor und/oder Teile der Auswerteeinrichtung in die Fahrzeugsteuerung integriert. Grundsätzlich kann der zweite Beschleunigungssensor beliebig an dem Fahrzeug angeordnet werden, zum Beispiel im oder am Antriebsteil. Bei der Anordnung der Auswerteeinrichtung bestehen noch größere Freiräume, denn diese kann wahlweise im oder am Fahrzeug, beispielsweise im Antriebsteil, oder auch in oder an der Deichsel angeordnet werden. Auch eine über unterschiedliche Bestandteile des Flurförderzeugs verteilte Anordnung einzelner Komponenten der Auswerteeinrichtung ist möglich. Eine Integration des zweiten Beschleunigungssensors und/oder der Auswerteeinrichtung oder von Teilen der Auswerteeinrichtung in die Fahrzeugsteuerung ist besonders einfach, weil hierfür weniger bzw. kürzere Leitungen zur Verbindung der genannten Komponenten mit der Fahrzeugsteuerung benötigt werden.

In einer Ausgestaltung ist der erste Beschleunigungssensor mit einer ersten Recheneinheit einer Deichselkopfelektronik verbunden. Die Deichselkopfelektronik ist im Kopf der Deichsel angeordnet und kann zusätzlich zu der ersten Recheneinheit beispielsweise Sensoren zur Erfassung der Stellung eines Fahrschalters oder eines sonstigen Betätigungselements, eine elektronische Schnittstelle, insbesondere zur Verbindung mit der Fahrzeugsteuerung, und ggf. weitere elektrische oder elektronische Komponenten aufweisen. Die mit dem ersten Beschleunigungssensor verbundene erste Recheneinheit wertet die von dem ersten Beschleunigungssensor zur Verfügung gestellten Signale aus und stellt eine aufbereitete Richtungsinformation zur Verfügung. Die erste Recheneinheit kann ein Teil der Auswerteeinrichtung sein. In einer Ausgestaltung ist der zweite Beschleunigungssensor mit einer zweiten Recheneinheit einer Steuerelektronik verbunden. Die zweite Recheneinheit wertet die vom zweiten Beschleunigungssensor zur Verfügung gestellten Signale aus und stellt eine aufbereitete Richtungsinformation zur Verfügung. Die zweite Recheneinheit kann ein Teil der Auswerteeinrichtung sein. Die Steuerelektronik kann ebenfalls ein Teil der Auswerteeinrichtung sein, insbesondere ein nahe der Fahrzeugsteuerung angeordneter oder in die Fahrzeugsteuerung integrierter Teil der Auswerteeinrichtung.

In einer Ausgestaltung ist eine Verbindung zwischen erstem Beschleunigungssensor und erster Recheneinheit und/oder eine Verbindung zwischen zweitem Beschleunigungssensor und zweiter Recheneinheit über eine serielle Schnittstelle ausgeführt. Die serielle Schnittstelle kann beispielsweise ein Serial Peripheral Interface (SPI) oder ein I²C (Inter-Integrated-Circuit) sein. Über derartige serielle Schnittstellen können die von den Beschleunigungssensoren gelieferten Daten zuverlässig ausgelesen werden.

In einer Ausgestaltung sind die Deichselkopfelektronik und die Steuerelektronik über ein Bussystem miteinander verbunden. Das Bussystem ermöglicht insbesondere eine unidirektionale Kommunikation von der Deichselkopfelektronik zur Steuerelektronik hin. Die Steuerelektronik kann beispielsweise nahe der Fahrzeugsteuerung angeordnet oder in diese integriert sein. Das Bussystem kann insbesondere ein CAN-Bus (Controller Area Network) sein. Auf diese Weise ist eine besonders zuverlässige Kommunikation zwischen Deichselkopfelektronik und Steuerelektronik möglich.

In einer Ausgestaltung sind zwei Festspeicher vorhanden, in denen einer definierten Deichselstellung zugehörige Richtungsinformationen des ersten Beschleunigungssensors und des zweiten Beschleunigungssensors gespeichert sind. Beispielsweise kann die definierte Deichselstellung der Parkposition entsprechen. Die zugehörigen Richtungsinformationen der beiden Beschleunigungssensoren können vor der Auslieferung des Flurförderzeugs in einem einmalig auszuführenden Anlernvorgang gespeichert werden. Sie sind nachfolgend in dem Festspeicher, der ein nicht flüchtiger Speicher ist, insbesondere ein EEPROM (electrically erasable programmable read-only memory) hinterlegt und während des späteren Betriebs des Flurförderzeugs jederzeit verfügbar. Bei den beiden Festspeichern kann es sich um gesonderte Speicherbauteile handeln, die beispielsweise in der Deichselkopfelektronik und in der Speicherelektronik angeordnet sind. Es kann jedoch auch ein einziges Speicherbauteil verwendet werden, das zwei geeignete Speicherbereiche aufweist. Das Speichern der zu der definierten Deichselstellung zugehörigen Richtungsinformationen entspricht einer Kalibrierung der beiden Beschleunigungssensoren. Auf Grundlage dieser Kalibrierung können die nachfolgend mit den beiden Beschleunigungssensoren gewonnenen Daten jederzeit ausgewertet und die relative Deichselstellung kann zuverlässig ermittelt werden.

In einer Ausgestaltung ist die Auswerteeinrichtung dazu ausgebildet, eine aus einem der Festspeicher ausgelesene Richtungsinformation anhand einer Prüfsumme zu verifizieren. Dieses Verifizieren kann beispielsweise bei jeder Inbetriebnahme des Flurförderzeugs erfolgen. Auf diese Weise kann die Zuverlässigkeit der ermittelten Deichselstellung und damit die Betriebssicherheit des Flurförderzeugs verbessert werden.

In einer Ausgestaltung ist die Auswerteeinrichtung dazu ausgebildet, eine von dem ersten Beschleunigungssensor und/oder von dem zweiten Beschleunigungssensor zur Verfügung gestellte Richtungsinformation und/oder eine ermittelte Deichselstellung anhand von gespeicherten Informationen über einen Bereich zulässiger Richtungsinformationen bzw. Deichselstellungen auf Plausibilität zu prüfen. Durch diese Plausibilitätskontrollen kann die Zuverlässigkeit der Ermittlung der Deichselstellung weiter verbessert werden. Insbesondere können die gespeicherten Informationen Daten über die mechanisch zugänglichen relativen Deichselstellungen in Bezug auf das Fahrzeug einschließen. Liegt eine ermittelte Deichselstellung außerhalb dieses mechanisch möglichen Bereichs, kann auf eine Fehlfunktion geschlossen werden.

Die oben genannte Aufgabe wird ebenfalls gelöst durch das Verfahren mit den Merkmalen des Anspruchs 15. Das Verfahren dient zur Ermittlung einer Deichselposition einer um eine horizontale Achse schwenkbar am Fahrzeug angelenkten Deichsel eines Flurförderzeugs und weist die folgenden Schritte auf:
- Erfassen einer Information über die Richtung einer auf die Deichsel wirkenden Beschleunigung,
- Erfassen einer Information über die Richtung einer auf das Fahrzeug wirkenden Beschleunigung,
- Ermitteln einer Deichselstellung relativ zum Fahrzeug auf Grundlage der erfassten Information über die Richtung der auf die Deichsel wirkenden Beschleunigung und der erfassten Information über die Richtung der auf das Fahrzeug wirkenden Beschleunigung.

Zur Erläuterung der Merkmale und Vorteile des Verfahrens wird auf die vorstehenden Erläuterungen des erfindungsgemäßen Flurförderzeugs verwiesen, die entsprechend gelten.

Das Verfahren kann als weiteren Schritt ein Zur-Verfügung-stellen der ermittelten Deichselstellung für eine Fahrzeugsteuerung und/oder ein Berücksichtigen der ermittelten Deichselstellung bei der Steuerung des Flurförderzeugs umfassen. Es versteht sich, dass das Erfassen einer Information über die Richtung einer auf die Deichsel wirkenden Beschleunigung mithilfe des ersten Beschleunigungssensors und das Erfassen einer Information über die Richtung einer auf das Fahrzeug wirkenden Beschleunigung mithilfe des zweiten Beschleunigungssensors bewerkstelligt werden kann. Für das Ermitteln der Deichselstellung relativ zum Fahrzeug kann die vorstehend erläuterte Auswerteeinrichtung verwendet werden.

Weitere Ausgestaltungen des Verfahrens ergeben sich ebenfalls aus den vorstehenden Erläuterungen des erfindungsgemäßen Flurförderzeugs. Beispielsweise kann bei dem Verfahren eine Winkelinformation über die Deichselstellung stufenlos oder in mehr als drei Bereiche unterteilt zur Verfügung gestellt werden. Es kann eine Geschwindigkeitsinformation über die Bewegung der Deichsel relativ zum Fahrzeug ermittelt und/oder zur Verfügung gestellt werden. Es kann eine Beschleunigungsinformation über die Bewegung der Deichsel relativ zum Fahrzeug ermittelt und/oder zur Verfügung gestellt werden. Es kann, insbesondere vor Auslieferung eines Flurförderzeugs, ein Anlernvorgang ausgeführt werden, bei dem die Deichsel in eine definierte Deichselstellung gebracht und die vom ersten und zweiten Beschleunigungssensor gelieferten Richtungsinformationen in zwei Festspeichern gespeichert werden. Es kann eine aus dem Festspeicher ausgelesene Richtungsinformation anhand einer Prüfsumme verifiziert werden. Es kann eine Plausibilitätskontrolle durchgeführt werden, insbesondere anhand von gespeicherten Informationen über einen Bereich zulässiger Richtungsinformationen bzw. Deichselstellungen.

Nachfolgend wird die Erfindung anhand eines in drei Figuren dargestellten Ausführungsbeispiels näher erläutert. Es zeigen:
- Fig. 1: ein erfindungsgemäßes Flurförderzeug in einer Ansicht von der Seite,
- Fig. 2: eine schematische Darstellung zur Anordnung und Verbindung wichtiger Komponenten des Flurförderzeugs aus Fig. 1, und
- Fig. 3: eine schematische Darstellung des erfindungsgemäßen Verfahrens.

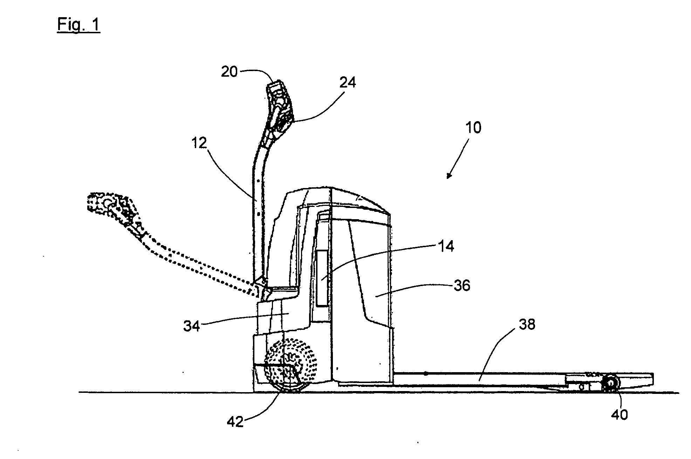

Das Flurförderzeug der Fig. 1 hat eine Deichsel 12, die um eine horizontale Achse schwenkbar am Fahrzeug 10 angelenkt ist. Das Fahrzeug 10 besteht im Wesentlichen aus einem Antriebsteil 34 und einem Lastteil 36. Das Lastteil 36 ist gegenüber dem Antriebsteil 34 anhebbar und weist zwei Lastarme 38 auf, an denen jeweils mindestens eine Lastrolle 40 nach unten schwenkbar angelenkt ist.

Das Antriebsteil 34 weist ein lenkbares Antriebsrad 42 auf, das von einem nicht dargestellten Fahrantriebsmotor angetrieben ist. Im Antriebsteil 34 befindet sich außerdem eine Fahrzeugsteuerung 14.

Die Deichsel 12 ist mit durchgezogenen Linien dargestellt in einer einer Parkposition entsprechenden ersten Deichselstellung, in der die Deichsel 12 annähernd vertikal ausgerichtet ist. Am von der Achse entfernten Ende weist die Deichsel 12 einen Kopf 20 auf, an dem mehrere Betätigungselemente angeordnet sind. Im Kopf 20 der Deichsel ist außerdem eine Deichselkopfelektronik 24 untergebracht. Mit gepunkteten Linien dargestellt ist die Deichsel 12 in einer zweiten Position, in der die Deichsel 12 schräg angeordnet ist, was einer Fahrposition entspricht.

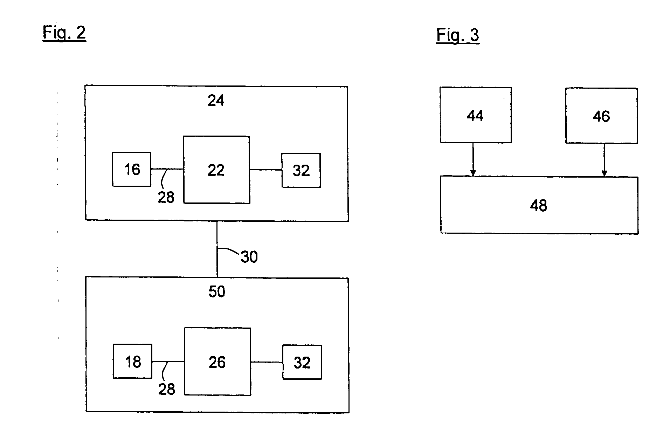

Fig. 2 zeigt oben schematisch die Deichselkopfelektronik 24, in die der erste Beschleunigungssensor 16 integriert ist. Über eine serielle Schnittstelle 28 ist der erste Beschleunigungssensor 16 mit einer ersten Recheneinheit 22 verbunden. Mit der ersten Recheneinheit 22 verbunden ist außerdem ein Festspeicher 32, in dem eine zu einer definierten Deichselstellung zugehörige Richtungsinformation des ersten Beschleunigungssensors 16 gespeichert ist.

Im unteren Teil der Fig. 2 ist ebenfalls schematisch eine Steuerelektronik 50 dargestellt, die nahe der Fahrzeugsteuerung 14 angeordnet oder in diese integriert ist. Die Steuerelektronik 50 ist über einen Datenbus 30 mit der Deichselkopfelektronik 24 verbunden.

Die Steuerelektronik 50 weist einen zweiten Beschleunigungssensor 18 auf, der über eine serielle Schnittstelle 28 mit einer zweiten Recheneinheit 26 verbunden ist. Ebenfalls mit der zweiten Recheneinheit 26 verbunden ist ein Festspeicher 32, in dem eine zu der definierten Deichselstellung zugehörige Richtungsinformation des zweiten Beschleunigungssensors 18 gespeichert ist.

Anhand der Fig. 3 wird das erfindungsgemäße Verfahren erläutert. Im Schritt 44 wird eine Information über die Richtung einer auf die Deichsel wirkenden Beschleunigung erfasst, vorzugsweise mit dem ersten Beschleunigungssensor 16. Im Schritt 46 wird eine Information über die Richtung einer auf das Fahrzeug 10 wirkenden Beschleunigung erfasst, vorzugsweise mit dem zweiten Beschleunigungssensor 18.

Im Schritt 48 wird eine Deichselstellung relativ zum Fahrzeug 10 auf Grundlage der in den Schritten 44, 46 erfassten Informationen ermittelt. Wie in der Fig. 3 angedeutet, können die Schritte 44 und 46 gleichzeitig ausgeführt werden.

In einem in der Fig. 3 nicht dargestellten, dem Schritt 48 nachgelagerten Verfahrensschritt kann die ermittelte Deichselstellung der Fahrzeugsteuerung 14 zur Verfügung gestellt und bei der Steuerung des Flurförderzeugs berücksichtigt werden.

## Patentansprüche

1. Flurförderzeug mit einer um eine horizontale Achse schwenkbar am Fahrzeug (10) angelenkten Deichsel (12) und einer Fahrzeugsteuerung (14) zur Steuerung des Flurförderzeugs unter Berücksichtigung einer Deichselstellung, **gekennzeichnet durch**
• einen an der Deichsel (12) angeordneten, ersten Beschleunigungssensor (16), der dazu ausgebildet ist, eine Information über die Richtung einer auf ihn wirkenden Beschleunigung zur Verfügung zu stellen,
• einen am Fahrzeug (10) angeordneten, zweiten Beschleunigungssensor (18), der dazu ausgebildet ist, eine Information über die Richtung einer auf ihn wirkenden Beschleunigung zur Verfügung zu stellen, und
• eine Auswerteeinrichtung, die dazu ausgebildet ist, auf Grundlage einer Richtungsinformation des ersten Beschleunigungssensors (16) und einer Richtungsinformation des zweiten Beschleunigungssensors (18) die Deichselstellung relativ zum Fahrzeug (10) zu ermitteln.

2. Flurförderzeug nach Anspruch 1, **dadurch gekennzeichnet, dass** die Auswerteeinrichtung dazu ausgebildet ist, eine Winkelinformation über die Deichselstellung stufenlos oder in mehr als drei Bereiche unterteilt zur Verfügung zu stellen.

3. Flurförderzeug nach Anspruch 1 oder 2, **dadurch gekennzeichnet, dass** die Auswerteeinrichtung dazu ausgebildet ist, eine Geschwindigkeitsinformation über die Bewegung der Deichsel (12) relativ zum Fahrzeug (10) zu ermitteln und/oder der Fahrzeugsteuerung (14) zur Verfügung zu stellen.

4. Flurförderzeug nach einem der Ansprüche 1 bis 3, **dadurch gekennzeichnet, dass** die Auswerteeinrichtung dazu ausgebildet ist, eine Beschleunigungsinformation über die Bewegung der Deichsel (12) relativ zum Fahrzeug (10) zu ermitteln und/oder der Fahrzeugsteuerung (14) zur Verfügung zu stellen.

5. Flurförderzeug nach einem der Ansprüche 1 bis 4, **dadurch gekennzeichnet, dass** der erste Beschleunigungssensor (16) und/oder der zweite Beschleunigungssensor (18) elektro-mechanische Mikrosystemkomponenten sind.

6. Flurförderzeug nach einem der Ansprüche 1 bis 5, **dadurch gekennzeichnet, dass** der erste Beschleunigungssensor (16) in einem Kopf (20) der Deichsel (12) angeordnet ist.

7. Flurförderzeug nach einem der Ansprüche 1 bis 6, **dadurch gekennzeichnet, dass** der zweite Beschleunigungssensor (18) und/oder Teile der Auswerteeinrichtung in die Fahrzeugsteuerung (14) integriert sind.

8. Flurförderzeug nach einem der Ansprüche 1 bis 7, **dadurch gekennzeichnet, dass** der erste Beschleunigungssensor (16) mit einer ersten Recheneinheit (22) einer Deichselkopfelektronik (24) verbunden ist.

9. Flurförderzeug nach einem der Ansprüche 1 bis 8, **dadurch gekennzeichnet, dass** der zweite Beschleunigungssensor (18) mit einer zweiten Recheneinheit (26) einer Steuerelektronik (50) verbunden ist.

10. Flurförderzeug nach Anspruch 8 oder 9, **dadurch gekennzeichnet, dass** eine Verbindung zwischen erstem Beschleunigungssensor (16) und erster Recheneinheit (22) und/oder eine Verbindung zwischen zweitem Beschleunigungssensor (18) und zweiter Recheneinheit (26) über eine serielle Schnittstelle (28) ausgeführt ist.

11. Flurförderzeug nach einem der Ansprüche 8 bis 10, **dadurch gekennzeichnet, dass** die Deichselkopfelektronik (24) und die Steuerelektronik (50) über ein Bussystem (30) miteinander verbunden sind.

12. Flurförderzeug nach einem der Ansprüche 1 bis 11, **dadurch gekennzeichnet, dass** zwei Festspeicher (32) vorhanden sind, in denen einer definierten Deichselstellung zugehörige Richtungsinformationen des ersten Beschleunigungssensors (16) und des zweiten Beschleunigungssensors (18) gespeichert sind.

13. Flurförderzeug nach Anspruch 12, **dadurch gekennzeichnet, dass** die Auswerteeinrichtung dazu ausgebildet ist, eine aus einem der Festspeicher (32) ausgelesene Richtungsinformation anhand einer Prüfsumme zu verifizieren.

14. Flurförderzeug nach einem der Ansprüche 1 bis 13, **dadurch gekennzeichnet, dass** die Auswerteeinrichtung dazu ausgebildet ist, eine von dem ersten Beschleunigungssensor (16) und/oder von dem zweiten Beschleunigungssensor (18) zur Verfügung gestellte Richtungsinformation und/oder eine ermittelte Deichselstellung anhand von gespeicherten Informationen über einen Bereich zulässiger Richtungsinformationen bzw. Deichselstellungen auf Plausibilität zu prüfen.

15. Verfahren zur Ermittlung einer Deichselposition einer um eine horizontale Achse schwenkbar am Fahrzeug (10) angelenkten Deichsel (12) eines Flurförderzeugs, wobei das Verfahren die folgenden Schritten aufweist:
• Erfassen einer Information über die Richtung einer auf die Deichsel (12) wirkenden Beschleunigung,
• Erfassen einer Information über die Richtung einer auf das Fahrzeug (10) wirkenden Beschleunigung,
• Ermitteln einer Deichselstellung relativ zum Fahrzeug (10) auf Grundlage der erfassten Information über die Richtung der auf die Deichsel (12) wirkenden Beschleunigung und der erfassten Information über die Richtung der auf das Fahrzeug (10) wirkenden Beschleunigung.

## Claims

1. An industrial truck with a drawbar (12) articulated on the vehicle (10) pivoting about a horizontal axis and a vehicle controller (14) for controlling the industrial truck taking into account a drawbar position, **characterized by**
• a first acceleration sensor (16) arranged on the drawbar (12), which is designed to make information available about the direction of an acceleration acting upon it,
• a second acceleration sensor (18) arranged on the vehicle (10), which is designed to make information available about the direction of an acceleration acting upon it, and
• an evaluation apparatus, which is designed to determine the drawbar position relative to the vehicle (10) on the basis of direction information from the first acceleration sensor (16) and on the basis of direction information from the second acceleration sensor (18).

2. The industrial truck according to Claim 1, **characterized in that** the evaluation apparatus is designed to make angular information available about the drawbar position steplessly or divided into more than three areas.

3. The industrial truck according to Claim 1 or 2, **characterized in that** the evaluation apparatus is designed to determine speed information about the movement of the drawbar (12) relative to the vehicle (10) and/or make it available to the vehicle controller (14).

4. The industrial truck according to any one of Claims 1 to 3, **characterized in that** the evaluation apparatus is designed to determine information about the movement of the drawbar (12) relative to the vehicle (10) and/or make it available to the vehicle controller (14).

5. The industrial truck according to any one of Claims 1 to 4, **characterized in that** the first acceleration sensor (16) and/or the second acceleration sensor (18) are electromechanical microsystem components.

6. The industrial truck according to any one of Claims 1 to 5, **characterized in that** the first acceleration sensor (16) is arranged in a head (20) of the drawbar (12).

7. The industrial truck according to any one of Claims 1 to 6, **characterized in that** the second acceleration sensor (18) and/or parts of the evaluation apparatus are integrated in the vehicle controller (14).

8. The industrial truck according to any one of Claims 1 to 7, **characterized in that** the first acceleration sensor (16) is connected to a first processing unit (22) of a drawbar head electronics system (24).

9. The industrial truck according to any one of Claims 1 to 8, **characterized in that** the second acceleration sensor (18) is connected to a second processing unit (26) of a controller electronics system (50).

10. The industrial truck according to Claim 8 or 9, **characterized in that** a connection between the first acceleration sensor (16) and first processing unit (22) and/or a connection between the second acceleration sensor (18) and second processing unit (26) is implemented via a serial interface (28).

11. The industrial truck according to any one of Claims 8 to 10, **characterized in that** the drawbar head electronics system (24) and the controller electronics system (50) are connected to one another via a bus system (30).

12. The industrial system according to any one of Claims 1 to 11, **characterized in that** two read-only memories (32) are present, in which direction information associated with a defined drawbar position of the first acceleration sensor (16) and of the second acceleration sensor (18) is stored.

13. The industrial truck according to Claim 12, **characterized in that** the evaluation apparatus is designed to verify direction information read out from one of the read-only memories (32) with the aid of a checksum.

14. The industrial truck according to any one of Claims 1 to 13, **characterized in that** the evaluation apparatus is designed to check direction information and/or a determined drawbar position made available by the first acceleration sensor (16) and/or by the second acceleration sensor (18) with the aid of stored information about a range of permissible direction information or respectively drawbar positions for plausibility.

15. A method for determining a drawbar position of a drawbar (12) articulated on the vehicle (10) of an industrial truck pivoting about a horizontal axis, wherein the method has the following steps:
• acquisition of information about the direction of an acceleration acting on the drawbar (12)
• acquisition of information about the direction of an acceleration acting on the vehicle (10),
• determination of a drawbar position relative to the vehicle (10) on the basis of the acquired information about the direction of the acceleration acting on the drawbar (12) and of the acquired information about the direction of the acceleration acting on the vehicle (10).

## Revendications

1. Chariot de manutention avec un timon (12) articulé sur le véhicule (10) de façon à pivoter autour d'un axe horizontal, et avec une commande de véhicule (14) destinée à commander le chariot de manutention en tenant compte d'une position de timon, **caractérisé par**
• un premier capteur d'accélération (16) monté sur le timon (12) et conçu pour fournir une information concernant la direction d'une accélération agissant sur celui-ci,
• un deuxième capteur d'accélération (18) monté sur le véhicule (10) et conçu pour fournir une information concernant la direction d'une accélération agissant sur celui-ci, et
• un dispositif d'évaluation conçu pour déterminer la position de timon par rapport au véhicule (10) sur la base d'une information de direction du premier capteur d'accélération (16) et d'une information de direction du deuxième capteur d'accélération (18).

2. Chariot de manutention selon la revendication 1, **caractérisé en ce que** le dispositif d'évaluation est conçu pour fournir une information d'angle relative à la position de timon, de façon continue ou divisée en plus de trois plages.

3. Chariot de manutention selon la revendication 1 ou 2, **caractérisé en ce que** le dispositif d'évaluation est conçu pour déterminer une information de vitesse relative au mouvement du timon (12) par rapport au véhicule (10), et/ou fournir celle-ci à la commande de véhicule (14).

4. Chariot de manutention selon l'une des revendications 1 à 3, **caractérisé en ce que** le dispositif d'évaluation est conçu pour déterminer une information d'accélération relative au mouvement du timon (12) par rapport au véhicule (10), et/ou fournir celle-ci à la commande de véhicule (14).

5. Chariot de manutention selon l'une des revendications 1 à 4, **caractérisé en ce que** le premier capteur d'accélération (16) et/ou le deuxième capteur d'accélération (18) est/sont des composants de microsystème électromécaniques.

6. Chariot de manutention selon l'une des revendications 1 à 5, **caractérisé en ce que** le premier capteur d'accélération (16) est agencé dans une tête (20) du timon (12).

7. Chariot de manutention selon l'une des revendications 1 à 6, **caractérisé en ce que** le deuxième capteur d'accélération (18) et/ou des parties du dispositif d'évaluation sont intégrés dans la commande de véhicule (14).

8. Chariot de manutention selon l'une des revendications 1 à 7, **caractérisé en ce que** le premier capteur d'accélération (16) est relié à une première unité de calcul (22) d'une électronique de tête de timon (24).

9. Chariot de manutention selon l'une des revendications 1 à 8, **caractérisé en ce que** le deuxième capteur d'accélération (18) est relié à une deuxième unité de calcul (26) d'une électronique de commande (50).

10. Chariot de manutention selon la revendication 8 ou 9, **caractérisé en ce qu'**il est établi une liaison entre le premier capteur d'accélération (16) et la première unité de calcul (22) et/ou une liaison entre le deuxième capteur d'accélération (18) et la deuxième unité de calcul (24) par le biais d'une interface sérielle (28).

11. Chariot de manutention selon l'une des revendications 8 à 10, **caractérisé en ce que** l'électronique de tête de timon (24) et l'électronique de commande (50) sont reliées entre elles par un système de bus (30).

12. Chariot de manutention selon l'une des revendications 1 à 11, **caractérisé en ce qu'**il est prévu deux mémoires mortes (32) dans lesquelles sont enregistrées des informations de direction du premier capteur d'accélération (16) et du deuxième capteur d'accélération (18) relatives à une position de timon définie.

13. Chariot de manutention selon la revendication 12, **caractérisé en ce que** le dispositif d'évaluation est conçu pour vérifier une information de direction lue à partir de l'une des mémoires mortes (32), à l'aide d'une somme de contrôle.

14. Chariot de manutention selon l'une des revendications 1 à 13, **caractérisé en ce que** le dispositif d'évaluation est conçu pour vérifier la plausibilité d'une information de direction fournie par le premier capteur d'accélération (16) et/ou par le deuxième capteur d'accélération (18), et/ou la plausibilité d'une position de timon déterminée, à l'aide d'informations enregistrées concernant une plage d'informations de direction ou de positions de timon autorisée.

15. Procédé de détermination d'une position de timon d'un timon (12) de chariot de manutention articulé sur le véhicule (10) de façon à pivoter autour d'un axe horizontal, le procédé comprenant les étapes suivantes :
• détection d'une information concernant la direction d'une accélération agissant sur le timon (12),
• détection d'une information concernant la direction d'une accélération agissant sur le véhicule (10),
• détermination d'une position de timon par rapport au véhicule (10), sur la base de l'information détectée concernant la direction de l'accélération agissant sur le timon (12) et de l'information détectée concernant la direction de l'accélération agissant sur le véhicule (10).
